# EUROPEAN PATENT APPLICATION

(11) **EP 2 157 539 A1**
(43) Date of publication of application: **24.02.2010**
(21) Application number: 07788676.0
(22) Date of filing: 16.07.2007
(51) Int. Cl.: G06Q 20/00

(54) **METHOD FOR MAKING A PAYMENT WITH A CREDIT/DEBIT CARD OVER THE TELEPHONE**

(30) Priority: 20.07.2006 ES 200601939
(71) Applicant: Domingo San Antonio, Antonio, 28036 Madrid (ES)
(72) Inventor: Domingo San Antonio, Antonio, 28036 Madrid (ES)
(74) Representative: Manzano Cantos, Gregorio
(86) International application number: PCT/ES2007/000431
(87) International publication number: WO 2008/009768

(57) **Abstract**

The invention relates to a process for credit/debit card payment over the telephone, to make the payment with a credit/debt card in which the seller or service provider does not require or need an electronic charging terminal connected with the network of the bank, the system of the invention performs said operation validly and effectively by means of a mobile or fixed telephone transaction involving a buyer or service user; a seller or service provider; a computer system; a bank or banking entity and mobile or fixed telephone communication means.

## Description

### Object of the Invention

To make a credit/debit card payment when something is purchased or a service is contracted, the seller or service provider must have an electronic terminal connected with the network of one or more banks in order to be able to cover the different banking networks into which credit cards are grouped.

When the seller or service provider does not have an electronic terminal connected to a bank or payment network, it cannot charge by this means, it must do so either by the old punching system (currently virtually eradicated); by means of checks or in cash.

The invention solves this problem by means of a system or process for the telephone interconnection between a buyer or service contractor and the seller or service provider, a computer system and the banking entity recipient of the charge of the credit/debit card of the buyer or service contractor.

The process has a series of identity and data verification steps with which by means of callback the seller can be certain of having charged the amount of the sale or service in order to attend to the buyer or service contractor in the operation which has been paid for by this means in a valid, effective and infallible manner.

### Background of the Invention

There are many means or systems by which purchases can be made, services can be contracted or other by means of indirect payments with credit/debit cards, especially through "INTERNET" telematic communication means or directly by means of the mentioned electronic terminals connected to the database of the banks.

There are various processes with this indirect form of payment in which the varying factors are substantially the data processing parameters, the aspects demanded and the assurances involved by both the buyer or service contractor and by the seller or service provider.

### Description of the Invention

The factors involved in the process are the buyer, the seller, the computer system, the banking entity and the fixed or mobile telephone communication means.

The buyer's order can be made personally and directly or by telephone, in both cases the buyer has to identify himself or herself by means of his or her official civil data and corresponding credit/debit card, therefore, according to the process of the invention:
0.- The seller must be previously registered in the payment system in order to perform the bank transactions. Said registration is performed by the company proprietor of the charging system and consists of registering a telephone of the seller, with which he or she will make calls to perform the transactions, and associating a password to him or her. These two pieces of data, telephone and password, will be necessary for identifying the system user.
1.- The buyer contacts the seller to buy a product or service from him or her and wishes to pay by means of a credit or debit card. The buyer can make the payment both being in the same physical location and at a distance, since the payment is made through a telephone call, which can be made by both a fixed telephone and a mobile telephone.
2.- The seller contacts the computer system through another telephone channel different from the channel of contact with the customer in the event that the connection between both has been over the telephone, in order to perform the transaction and charge the buyer.
3.- Due to the fact that the seller is previously registered in the computer system, it recognizes the telephone number of the seller it has registered therein.
4.- The computer system welcomes the seller and requests his or her password in order to be able to validate his or her identity by comparing it with the telephone from which the call is made.
5.- The seller marks his or her password through the keys of the telephone from which he or she is making the call to the computer system.
6.- The computer system checks the password, validating it with respect to the telephone number that it has associated in the system, which must be the same from which the operation is performed.
7.- From this moment, the charging process starts: the computer system requests the seller to enter the card number in which the charge will be made.
8.- The seller enters the 16 digits of the card of the buyer which was previously provided by the latter by pressing the keys in his or her telephone. The system checks if they match the amount of digits corresponding to the 16 numbers of a credit or debit card.
9.- The computer system requests from the seller the expiry number of the card in which the charge will be made. The seller knows this piece of data because the buyer has provided it in advance.
10.- The seller types in his or her telephone the 4 digits of the expiry of the card of the buyer. The computer system checks if they match the numbers (4) of the expiry of the card.
11.- The computer system requests from the seller the amount which will be charged in the operation.
12.- The seller types in his or her telephone the amount which will be charged in the operation. The system checks if the amount typed in is not greater than the maximum amount allowed.
13.- The computer system announces to the seller by means of pre-recorded voices or sounds imitating the human voice all the information which has been entered:
   - The 16 digits of the credit or debit card.
   - The 4 digits of the expiry date of said card
   - The amount which will be charged in the operation on said card.
   The computer system then requests from the seller his or her approval by asking him or her to press a certain key to confirm the data and another different key in the event of them not being correct and wishing to start again.
14.- In the event of them being correct, the seller will press the corresponding key in his or her telephone to confirm the entire transaction.
15.- The computer system will communicate to the seller that it is connecting with the bank and to wait a few seconds until the operation is performed.
16.- The computer system communicates with the bank electronically, transmitting all the information in an encrypted manner. The bank checks if the received information corresponding to the card and the expiry is correct and corresponds to a valid and effective card, it then checks that the information corresponding to the amount which has been sent to it is less than the available balance of said card.
17.- The bank communicates to the computer system, also electronically, that the operation is confirmed, or rejected, again transmitting all the information in an encrypted format.
18.- The computer system confirms to the seller, over the telephone, by means of pre-recorded voices or sounds imitating the human voice that the charge has been made successfully or has been rejected due to insufficient balance or other reasons.
19.- The seller confirms to the buyer, through another channel different from that through which the seller has connected with the computer system, in the event that the connection between both has been over the telephone, that the charge has been made successfully or not. In this instant is when the service or product has been paid for and when the seller provides the service or product that the buyer wished to buy, whether it is a physical product which he or she hands out instantaneously; a physical product which will be sent to him or her by conventional transport; a service provided to him or her, both by telephone and physically in the event of being in the same location, at the same time or any other which may arise.

A broader idea of the features of the invention will be provided below, upon referring to the sheets of the drawings attached in this specification, in a schematic manner and only by way of an example, depicting the preferred and essential details of the patent.

### In the Drawings

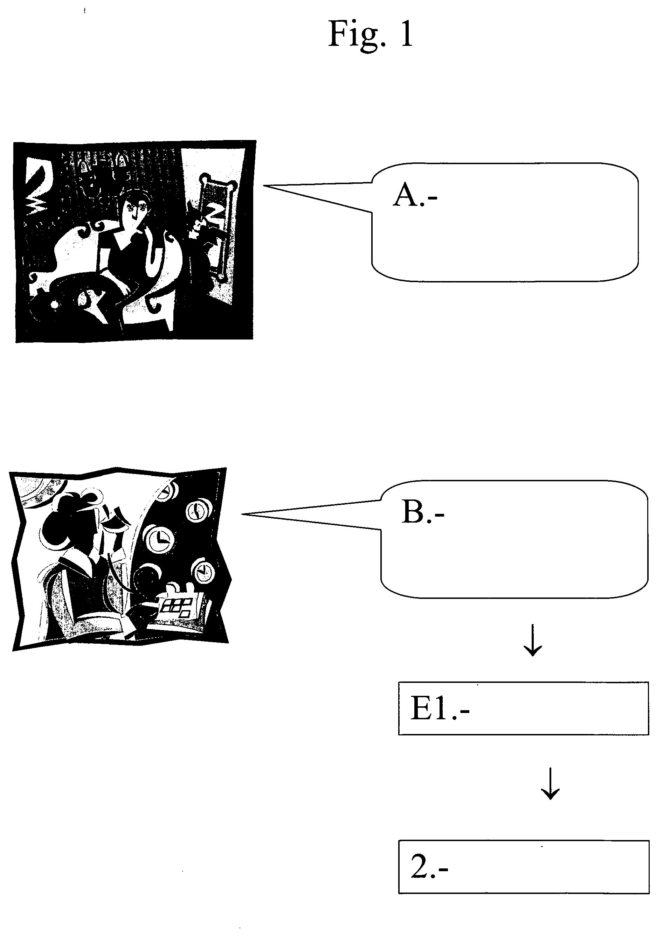

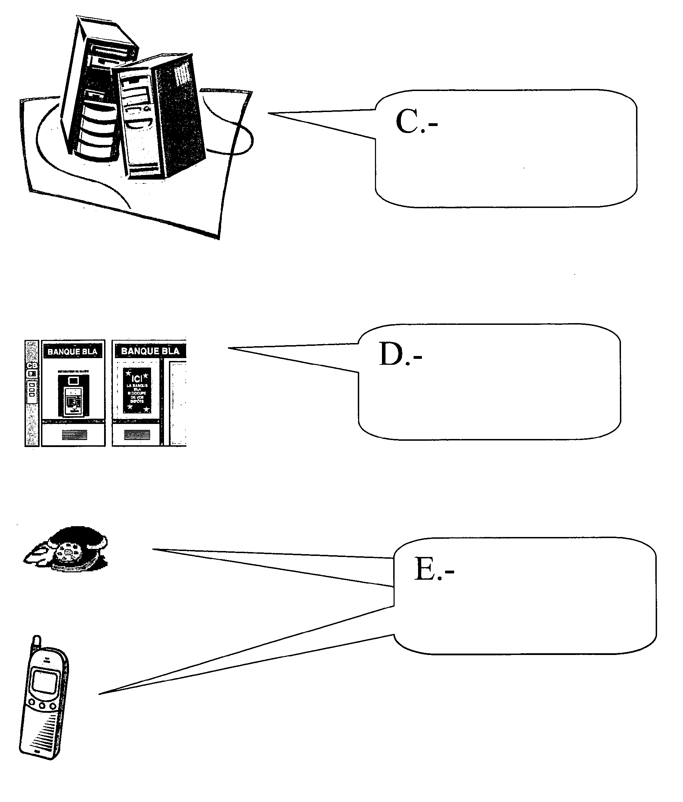

Figure 1 schematically shows the buyer identified by (A); the seller, the system user, identified by (B); the computer system, identified by (C); the banking system identified by (D) and the communication means, specifically telephone communication means, identified by (E). The system user (B) is registered in (C) with a telephone number (E1) and a digital password (2) associated to said telephone number with any combination, in the conditions of section (0) of the description.

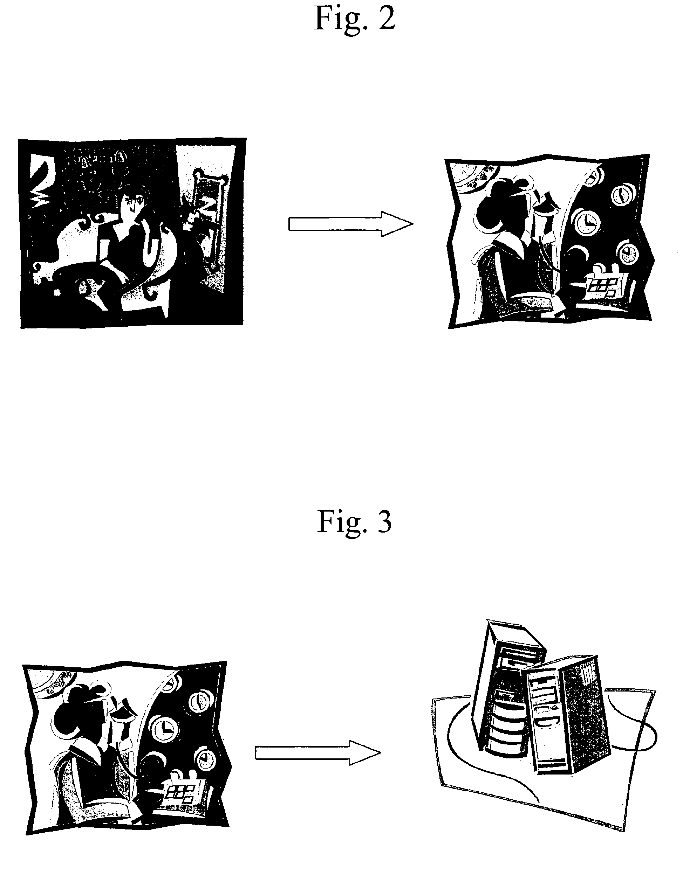

Figure 2 schematically shows how the buyer (A) contacts the seller (B), personally or over the telephone, for an operation which he or she must pay for by means of a credit/debit card the data of which he or she must provide to the seller (B), in the conditions of section (1) of the description.

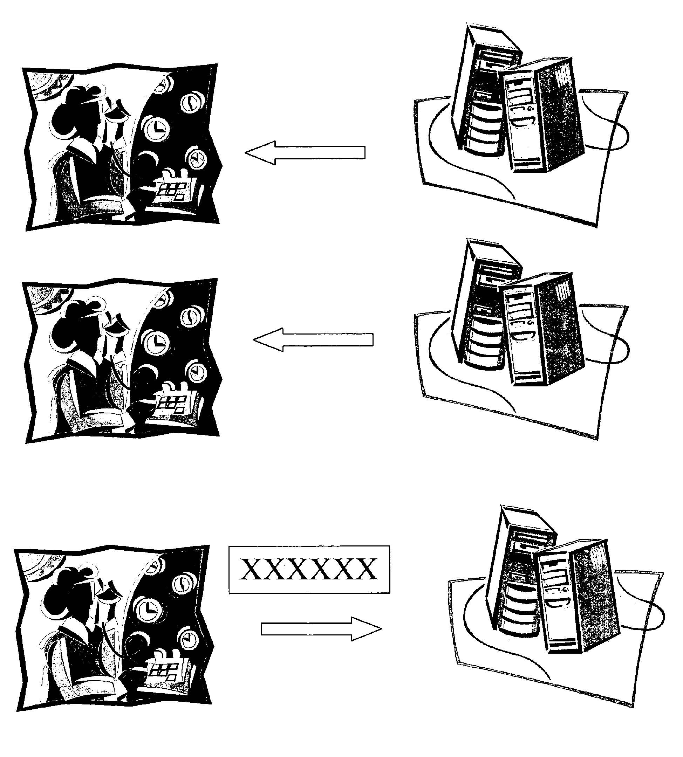

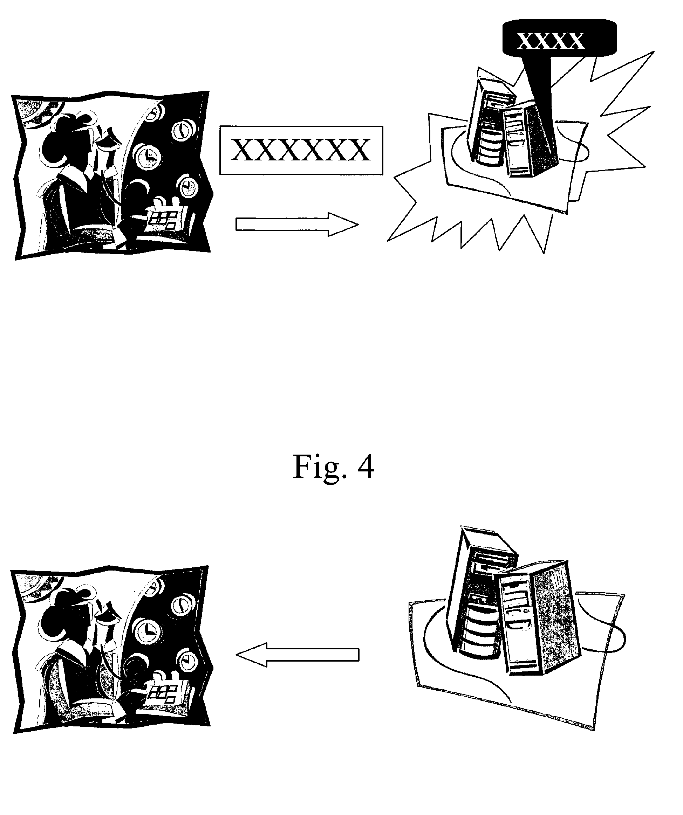

Figure 3 schematically shows how the seller (B) contacts the computer system (C); how the computer system (C) recognizes the telephone number of (B) it has registered therein; how the computer system (C) requires the password of (B) to valid both pieces of data according to paragraphs 2, 3, 4, 5 and 6 of the description.

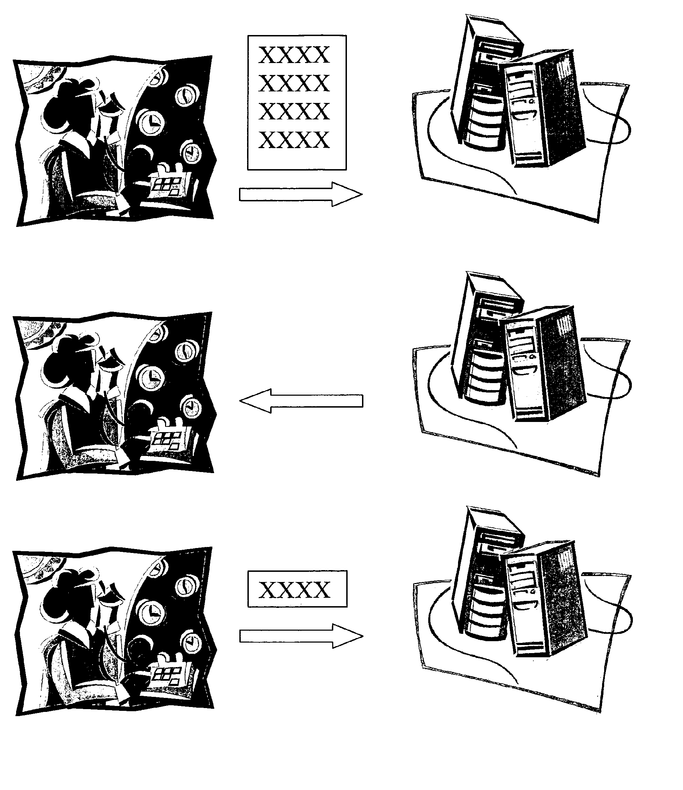

Figure 4 schematically shows the first phase of the charging process, from this moment the computer system (C) requests (B) to type in the number of the card; (B) enters it with the keyboard of his or her telephone, sixteen digits, checking them; then (C) requests from (B) the four digits of the expiry date of the card, according to paragraphs 7, 8, 9 and 10 of the description.

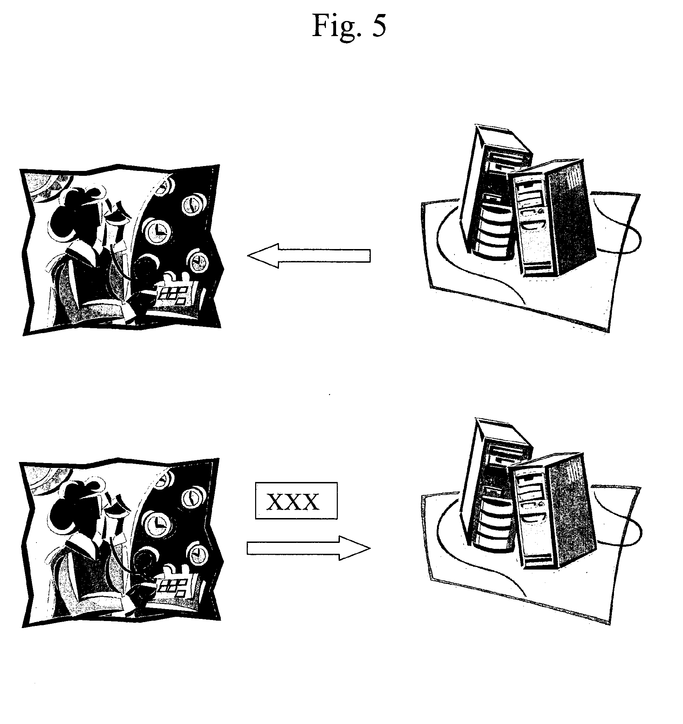

Figure 5 schematically shows how the system (C) requests from (B) the amount to be charged which he or she also types in his or her telephone, verifying its viability; the system (C) announces by means of pre-recorded voices or sounds imitating the human voice to (B) all the information which has been entered according to paragraphs 11, 12 and 13 of the description.

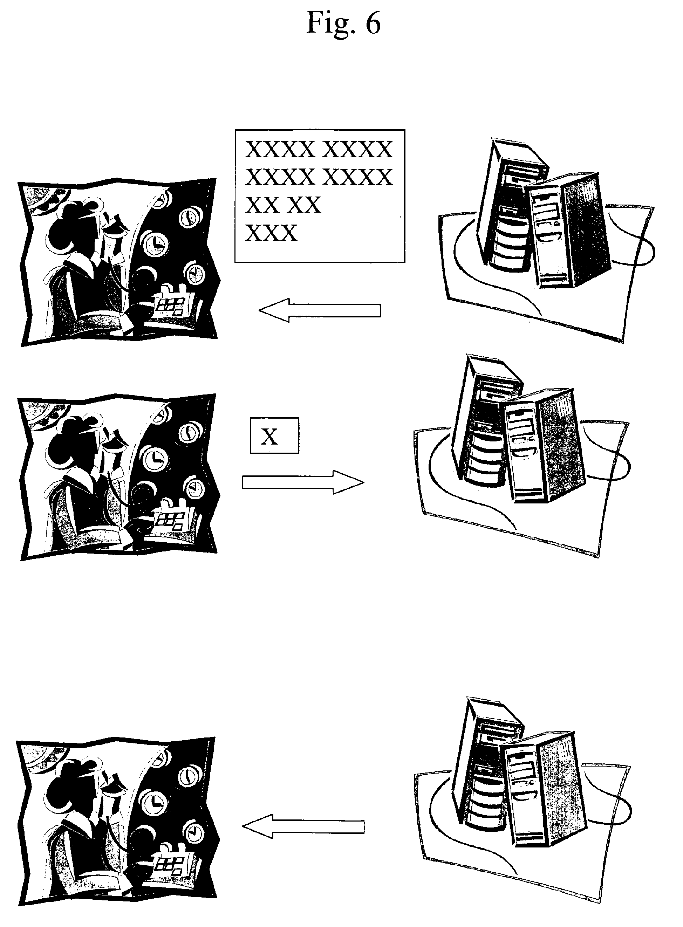

Figure 6 schematically shows how (C) requests from (B) his or her approval by pressing a key to approve the data and another different key for refusal; in the event of being correct (B) will press a key of confirmation for the transaction; the system (C) communicates to (B) that it is connecting with (D) according to paragraphs 13, 14 and 15 of the description.

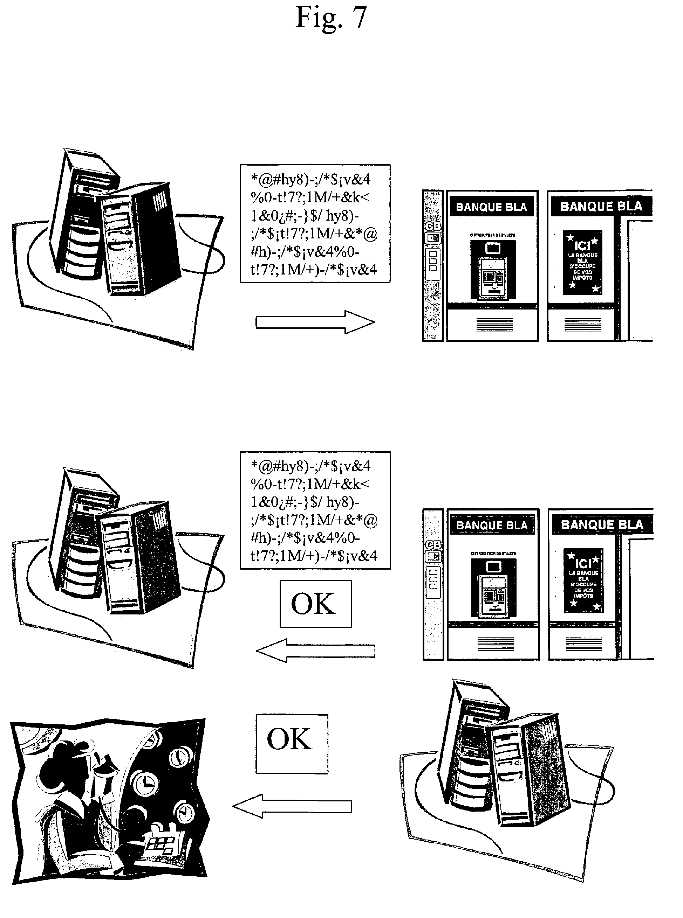

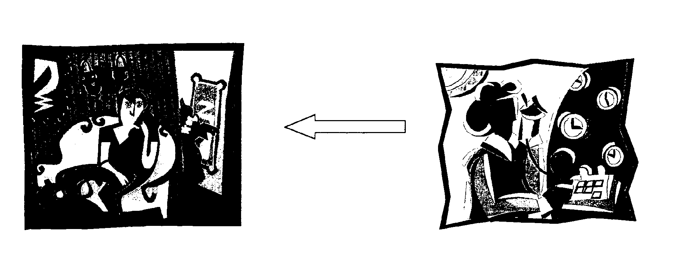

Figure 7 schematically shows how (C) communicates with (D) electronically, transmitting all the information in an encrypted manner; (D) communicates to (C), also electronically, that the operation is confirmed, also in an encrypted format; then (C) confirms to (B) over the telephone that the charge has been made; finally, (B) confirms to the buyer (A) through another different channel, personally or over the telephone, that the charge has been made successfully according to paragraphs 16, 17, 18 and 19 of the description.

From this moment, the commercial operation can end correctly in the manner wished by the buyer (A).

Having sufficiently described the nature of the invention, it is stated for all intents and purposes that such invention is not limited to the exact details of this description, but on the contrary, the modifications considered to be suitable can be introduced therein provided that they do not alter the essential features thereof which are detailed below.

## Claims

1. A process for credit/debit card payment over the telephone, to make the payment with a credit/debit card in which the seller or service provider does not require or need an electronic charging terminal connected with the network of the bank, which is **characterized in that** the system performs said operation validly and effectively by means of a mobile or fixed telephone transaction involving a buyer or service user (A); a seller or service provider (B); a computer system (C); a bank or banking entity (D); mobile or fixed telephone communication means (E) and in which the seller (B) has to be previously registered in the payment system in order to be able to perform the bank transactions.

2. A process for credit/debit card payment over the telephone, wherein the form of registration of the seller or service provider (B) according to claim 1 is **characterized in that** it consists of a single and only mobile or fixed telephone number, (E1) and a digital password (2), with any combination, which will be necessary for identifying the user in the computer system (C).

3. A process for credit/debit card payment over the telephone, wherein the process of the transaction according to claim 1 is **characterized in that** the buyer (A) contacts the seller (B) randomly, personally, over the telephone or in another way, providing him or her with the number of the credit/debit card with which he or she wishes to pay and the expiry date thereof; the seller (B) contacts the computer system (C) over the telephone by means of the registered telephone, which system recognizes it, requesting from him or her the password to validate the identity of the user.

4. A process for credit/debit card payment over the telephone which, once the identity of the user of the system (C) has been validated according to claim 3, is **characterized in that** the seller (B) types the password in his or her registered telephone which the computer system (C) validates, if it is correct, the charging phase being started.

5. The process for credit/debit card payment over the telephone, wherein the charging phase of the previous claim is **characterized in that** the computer system (C) requests from the seller (B) the number of the payment card, typing in the registered telephone the sixteen digits thereof, the system assesses their correctness and requests from (B) the expiry date the four digits of which he or she types in said telephone; it then requests from him or her the amount of the transaction, which he or she types in his or her telephone; the computer system (C) verifies that the amount does not exceed the limit allowed.

6. A process for credit/debit card payment over the telephone, wherein the operation of the transaction according to claims 1 and 5 is **characterized in that** the computer system (C) announces by means of pre-recorded voices or sounds imitating the human voice all the information which has been entered in claim 5 and then requests the seller (B), over the telephone, to press a key to confirm the data or another key to refuse them and, in the event of being correct, to reaffirm them; in this case the computer system (C) communicates that it contacts the bank (D) electronically by means of encrypted information.

7. A process for credit/debit card payment over the telephone, wherein the validation of the transaction of claim 6 is **characterized in that** the bank (D) electronically communicates to the computer system (C) that the operation is confirmed, also in an encrypted format, and the system (C) communicates to the seller (B) over the registered telephone that the charge has been made affirmatively and that the operation with the buyer (A) can be performed.
